# EUROPÄISCHE PATENTSCHRIFT

(11) **EP 1 645 359 B1**
(45) Veröffentlichungstag und Bekanntmachung des Hinweises auf die Patenterteilung: **04.04.2007**
(21) Anmeldenummer: 05021636.5
(22) Anmeldetag: 04.10.2005
(51) Int. Cl.: B23Q 1/54, F16M 11/12

(54) **Werkzeugmaschine**
Machine tool
Machine outil

(30) Priorität: 11.10.2004 DE 102004049525
(43) Veröffentlichungstag der Anmeldung: 12.04.2006
(73) Patentinhaber: Deckel Maho Seebach GmbH, 99846 Seebach (DE)
(72) Erfinder: Schmidt, Klaus, 99846 Seebach (DE); Prautzsch, Ines, 99891 Tabarz (DE)
(74) Vertreter: Beetz & Partner

(56) Entgegenhaltungen:
- US-A- 4 630 509
- US-A- 4 644 635
- US-A- 5 669 867

## Beschreibung

Die Erfindung betrifft eine Werkzeugmaschine, insbesondere eine Fräs- und Bohrmaschine, mit einem formsteifen Unterbau, auf dem eine schräg nach vorne/oben weisende Tragfläche ausgebildet ist, mit mindestens einem um die Mittelachse dieser Tragfläche verdrehbaren Werkstückträger, der eine auf der Tragfläche um deren Mittelachse verdrehbar abgestützte Konsole und einen auf einem abgewinkelten Tragteil der Konsole angeordneten Werkstücktisch aufweist dessen Achse zur Mittelachse der Tragfläche einen spitzen Winkel einschließt, und mit mindestens einer in Koordinatenachsen verfahrbaren Bearbeitungseinheit mit einwechselbarem Werkzeug.

Aus der EP 0 721 819 B1 ist eine Fräs- und Bohrmaschine zur mehrachsigen Bearbeitung eines Werkstücks in einer Aufspannung bekannt, die eine an einem formsteifen Maschinenständer in Koordinatenachsen motorisch verfahrbare Bearbeitungseinheit mit einem vertikalen Spindelkopf aufweist. An der vorderen Stirnseite des Maschinenständers ist eine Ausnehmung vorgesehen, deren unter 45° nach vorn-oben weisender Boden ein Auflager für die Tragkonsole eines Werkstückträgers bildet. Die Tragkonsole ist um die unter 45° geneigte Mittelachse des Auflagers verdrehbar und weist einen in Draufsicht kreisrunden Fuß sowie einen damit einstückig ausgebildeten Tragansatz auf. Eine an diesem Tragansatz ausgebildete Tragfläche ist unter einem Winkel von 45° zur Tragkonsolen-Drehachse geneigt und bildet ein Auflager für einen Werkstücktisch, der als motorisch um seine Mittelachse verdrehbarer Rundtisch ausgebildet sein kann. Die Ausnehmung und damit auch deren unter 45° nach vorn-oben weisender Boden sowie der darauf verdrehbar abgestützte Werkstückträger sind am Maschinenständer in dessen vertikaler Mittelebene angeordnet. Durch Verdrehen des Werkstückträgers auf dem Auflager um dessen Mittelachse kann der Werkstücktisch in eine horizontale Arbeits- und Spannposition, eine vertikale Position sowie in Zwischenlagen gebracht und in jeder dieser Positionen fixiert werden, so daß ein aufgespanntes Werkstück in einer Aufspannung mittels der Vertikalspindel mehrachsig bearbeitet werden kann. Allerdings lassen sich rückseitige Hinterschneidungen auf dieser Maschine nicht herstellen.

Weitere Werkzeugmaschinen mit auf einer 45°-Schrägfläche verdrehbar angeordneten Werkstückträgern sind beispielsweise aus der DE 3 590 093 T und aus der US 4 644 635 bekannt. Auch bei diesen Maschinen läßt sich der Werkstücktisch aus einer horizontalen Position in eine vertikale Stellung motorisch bewegen, so daß ein aufgespanntes Werkstück vertikal und horizontal bearbeitet werden kann.

Aufgabe der Erfindung ist es, eine Werkzeugmaschine, insbesondere eine Fräs- und Bohrmaschine, zu schaffen, die einen erweiterten Bearbeitungsbereich bietet und insbesondere rückwärtige Hinterschnitte an einem Werkstück ermöglicht.

Diese Aufgabe wird durch eine Werkzeugmaschine gemäß Anspruch 1 gelöst.

Bei der erfindungsgemäß ausgebildeten Werkzeugmaschine kann der Werkstücktisch durch eine Verdrehung des Werkstückträgers, d.h. der Konsole mit dem Werkstücktisch, um die Mittelachse der seitlich versetzten schrägen Tragfläche aus einer horizontalen Lage in eine Vertikalposition sowie auch in Zwischenstellungen bewegt und in jeder dieser Stellungen durch geeignete Fixiereinrichtungen in Form von z.B. Klemmelementen, Zentrierbolzen und/oder lagegeregelten Motoren genau und stabil festgelegt werden. In der horizontalen und vertikalen Grundstellung können Arbeiten in der aus der genannten EP 0 721 819 B1 bekannten Weise ausgeführt werden. Die sich bei dieser bekannten Bohr- und Fräsmaschine gegenüber herkömmlichen Maschinentypen ergebenden Vorteile, wie bequeme Zugänglichkeit zum Arbeitsraum, stabile Abstützung des Werkstückträgers am Unterbau durch großflächige Auflage der Konsole auf der Tragfläche usw., sind auch bei der erfindungsgemäßen Werkzeugmaschine vorhanden. Erfindungsgemäß besteht darüber hinaus bei der neuen Maschine die weitere Möglichkeit, dass der Werkstücktisch in einem vorgegebenen Drehwinkelbereich eine nach vorn überkippte Stellung einnimmt, in welcher die aufgespannten Werkstücke mit einer einfachen Vertikalspindel - ohne Schwenkkopf - rückseitig bearbeitet und u.a. Hinterschneidungen im Werkstück hergestellt werden können.

Gemäß einer zweckmäßigen Ausgestaltung der Erfindung ist der Winkel zwischen der die Drehachse des Werkstückträgers bildenden Mittelachse der Tragfläche und der Achse des Werkstücktisches in der durch diese Mittelachse der Tragfläche verlaufenden Vertikalebene in einem vorbestimmten Bereich größer als 45°, durch Festlegung dieses Winkels ein bestimmter maximaler Grad an Überkippung des Werkstücktisches erreicht wird. Entsprechend diesem Winkel wird der Grad der seitlichen Versetzung des Werkstückträgers und der raum-schrägen Ausrichtung seiner Mittelachse bestimmt.

Zur Steigerung der Produktivität zeichnet sich eine Weiterbildung der Erfindung dadurch aus, daß an einem Unterbau zwei Werkstückträger auf zwei zu beiden Seiten der vertikalen Mittelebene angeordneten schrägen Tragflächen vorgesehen sind. Damit kann während der Bearbeitungszeit eines Werkstückes ein weiteres Werkstück auf dem zweiten Werkstücktisch gespannt werden.

Im folgenden wird ein Ausführungsbeispiel der Erfindung anhand der Zeichnung im einzelnen beschrieben. Es zeigen:
- Fig. 1: eine Fräs- und Bohrmaschine in perspektivischer Darstellung;
- Fig. 2: den Unterbau einer Fräs- und Bohrmaschine mit einem Werkstückträger in unterschiedlichen Betriebsstellungen;
- Fig. 3: schematisch den Unterbau einer Fräs- und Bohrmaschine mit dem Werkstückträger in Draufsicht;
- Fig. 4: schematisch eine Seitenansicht des Werkstückträgers.

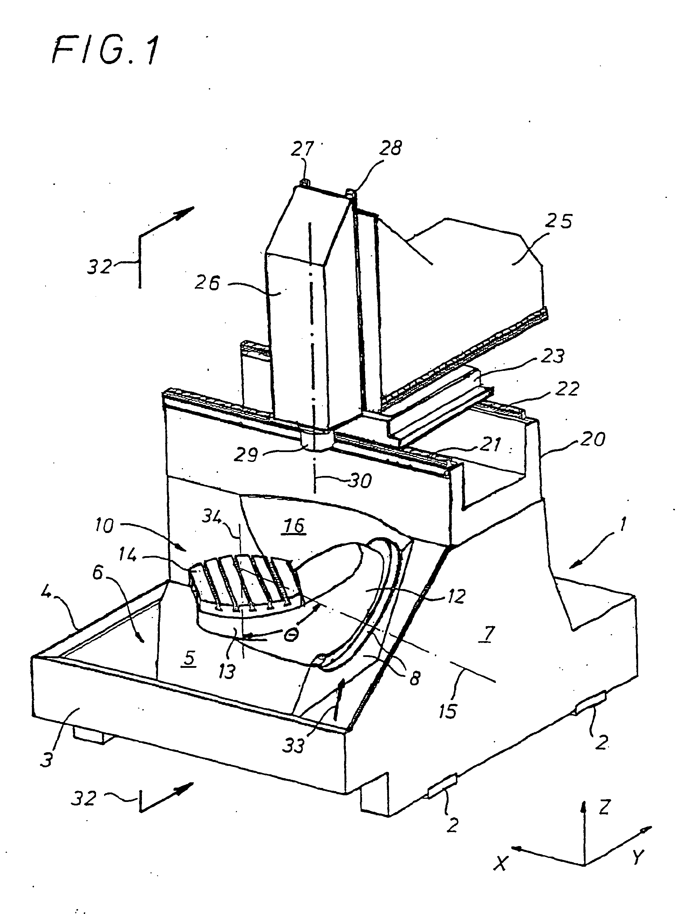

Die in Fig. 1 dargestellte Universal-Fräs- und Bohrmaschine enthält einen formsteifen Unterbau 1, der über Füße 2 auf dem Boden bzw. Fundament aufliegt. An der Vorderseite dieses Unterbaus 1 ist eine durch Seitenwände 3, 4 und eine schräge Rückwand 5 begrenzte Wanne 6 zum Auffangen von Spänen und Bearbeitungsflüssigkeiten vorgesehen. Die Wanne 6 wird an ihrer in Fig. 1 rechten Seite von einer schräg nach vorn-oben weisenden Tragfläche 8 begrenzt, die ein Auflager für einen Werkstückträger 10 bildet. Diese Tragfläche 8 ist zur vertikalen Mittelebene 32 des Unterbaus 1 seitlich versetzt an einem seitlichen Teil des Unterbaus 1 ausgebildet und derart ausgerichtet, daß ihre schräg im Raum verlaufende Mittelachse 15 mit einer vertikalen Längsebene, hier der vertikalen Mittelebene 32 einen spitzen Raumwinkel θ einschließt.

Der Werkstückträger 10 weist eine Konsole 11 auf, die einen kreisrunden Fuß 12 und einen daran einstückig angeformten abgewinkelten Tragteil 13 enthält, auf dessen Oberseite ein Werkstücktisch 14 montiert ist. Dieser Werkstücktisch 14 kann als drehangetriebener Rundtisch ausgebildet sein. Der kreisrunde Fuß 12 der Konsole 11 ist auf der Tragfläche 8 des Unterbaus 1 großflächig abgestützt und um die unter dem spitzen Raumwinkel θ verlaufende Mittelachse 15 der Tragfläche 8 und des Konsolenfußes 12 motorisch verdrehbar, so dass der Werkstückträger 10 in beiden Drehrichtungen um seine Achse 15 gedreht werden kann. Durch nicht dargestellte Arretiermittel, wie Verriegelungen, Klemmelemente oder lagegeregelte E-Motoren, kann die Konsole 11 in beliebigen Drehstellungen gegenüber der Auflagefläche 8 fixiert werden. Ferner ist an der Stirnseite des Unterbaus 1 in Fig. 1 links neben der schrägen Tragfläche 8 eine vorderseitige abgerundete Einwölbung 16 ausgebildet, welche kollisionsfreie Verdrehbewegungen des Werkstückträgers 10 um die Mittelachse 15 zuläßt.

Bei der in Fig. 1 dargestellten Fräs- und Bohrmaschine ist auf dem Unterbau 1 ein Träger 20 von hier U-förmigem Querschnitt befestigt, auf dessen beiden oberen Schenkeln je eine Führungssschiene 21, 22 montiert ist. Auf diesen beiden Führungsschienen 21, 22 ist ein in der X-Koordinatenachse motorisch verfahrbarer Schlitten 23 abgestützt, der zwei oberseitige voneinander beabstandete Führungsschienen als Träger eines in Richtung der Y-Achse verfahrbaren Gehäuses 25 aufweist. An der vertikalen Stirnseite des Gehäuses 25 ist eine Bearbeitungseinheit 26 in Vertikalführungen 27, 28 verfahrbar, die eine angetriebene Arbeitsspindel 29 mit vertikaler Spindelachse 30 sowie einen Spindelantrieb enthält. Statt dieses vertikalen Spindelkopfes 26 können auch Horizontalspindeln und sog. Schwenkköpfe mit verschwenkbarer Arbeitsspindel eingesetzt werden.

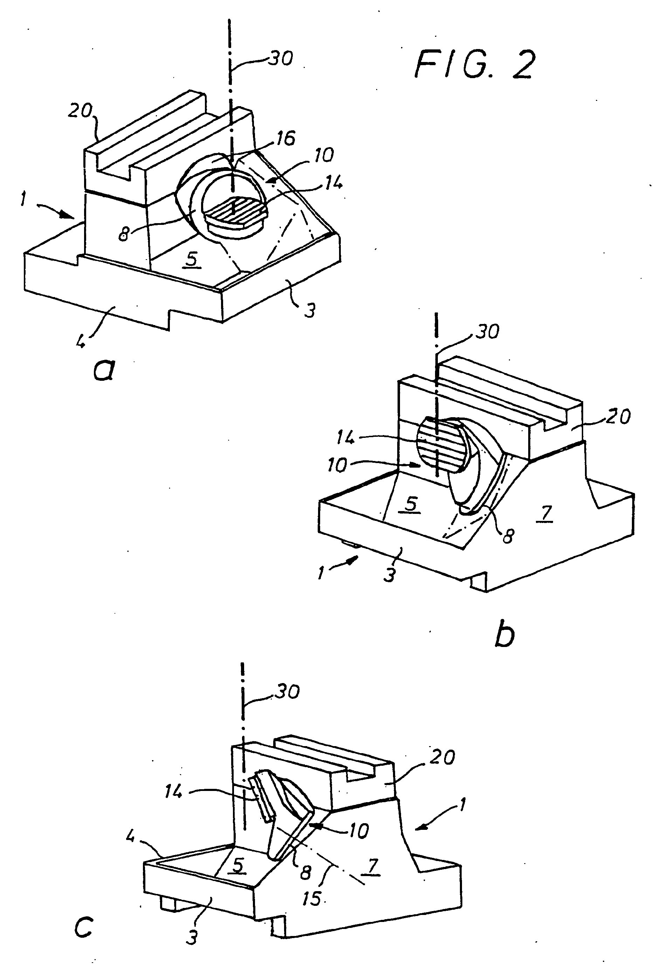

In den Figuren 2a, b und c ist der Unterbau 1 mit dem Träger 20 und dem Werkstückträger 10 in verschiedenen perspektivischen Ansichten dargestellt, wobei sich der Werkstücktisch 14 in jeweils unterschiedlichen Stellungen befindet. Nach Fig. 2a hat der Werkstücktisch 14 eine horizontale Grundstellung, die auch in Fig. 1 dargestellt ist und in welcher die Werkstücke mittels der Vertikalspindel 29 bearbeitet werden. Von der Arbeitsspindel ist hier lediglich die Spindelachse 30 als verdickte Strich-Punkt-Linie eingezeichnet. Wie aus Fig. 1 und Fig. 2a ersichtlich, verlaufen die Spann-Nuten im Werkstücktisch 14 nicht - wie üblich - parallel zur X- oder Y-Koordinatenachse, sondern unter einem spitzen Winkel. Bei Verwendung eines drehangetriebenen Rundtisches 14 kann durch eine Verdrehung um die Tischachse 34 die herkömmliche Tischstellung mit parallel zur X-Koordinatenachse verlaufenden Spann-Nuten sowie auch jede andere Stellung des Werkstücktisches erzielt werden.

Bei der in Fig. 2b dargestellten zweiten Grundstellung ist der Werkstückträger 10 um einen vorgegebenen Winkel auf der schrägen Tragfläche 8 um seine Achse 15 verdreht, so daß sich der Werkstücktisch 14 in vertikaler Position befindet. In der dargestellten Position ist der um seine Achse 34 verdrehbar ausgeführte Werkstücktisch 14 so verdreht, daß seine Spann-Nuten in Richtung der X-Koordinatenachse ausgerichtet sind. Durch Drehbewegungen des Werkstücktisches 14 können alle Seiten eines aufgespannten Werkstücks mit einem in die vertikale Arbeitsspindel eingespannten Werkzeug in üblicher Weise bearbeitet werden.

Wenn der Werkstückträger 10 aus der in Fig. 2a gezeigten Grunstellung mit horizontalem Werkstücktisch 14 um 180° um seine Drehachse 15, d.i. die Mittelachse 15 der Tragfläche 8, in die in Fig. 2c gezeigte Stellung verdreht wird, gelangt der Werkstücktisch 14 mit dem daran festgespannten - nicht dargestellten - Werkstück in eine überkippte Lage. Ein in der durch die Achse 30 angedeuteten vertikalen Arbeitsspindel eingespanntes Werkzeug kann in dieser Tischstellung rückwärtige Hinterschneidungen im Werkstück herstellen. Durch Verdrehen des Werkstücktisches 14 um seine Mittelachse 34 können die Hinterschneidungen an jeder Werkstückseite ausgearbeitet werden. Erzielt wird dieser Effekt durch Zusammenwirken der seitlichen Versetzung des Werkstückträgers 10 und der besonderen Schrägausrichtung seiner Drehachse 15.

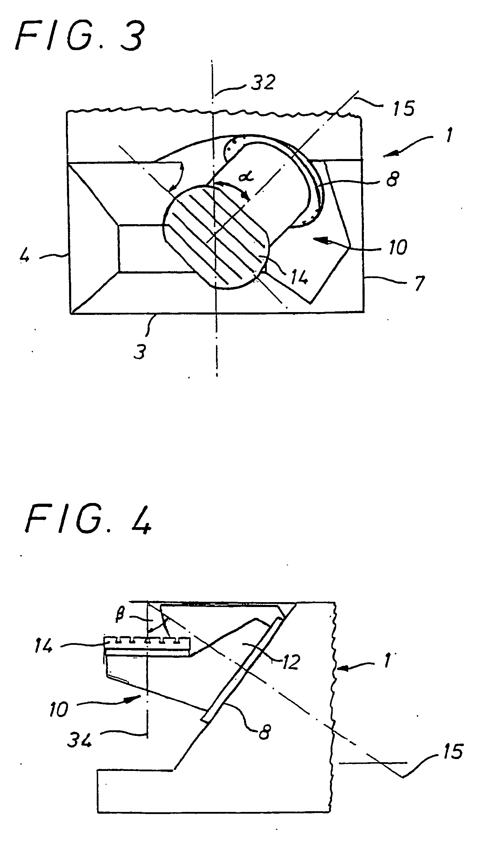

In den schematischen Darstellungen der Figuren 3 und 4 sind die Winkel für das in Fig. 1 im einzelnen dargestellte Ausführungsbeispiel der Erfindung eingezeichnet, wobei sich der Werkstücktisch 14 in seiner horizontalen Grunstellung befindet. Wie aus der Draufsicht in Fig. 3 ersichtlich, beträgt der die seitliche Versetzung des Werkstückträgers 10 bestimmende Winkel α zwischen der vertikalen Mittelebene 32 und der Drehachse 15 des Werkstückträgers 10 in der Zeichenebene etwa 45,6°.

Fig. 4 ist eine schematische Seitenansicht des Werkzeugträgers 10 in Richtung parallel zur Schrägfläche 8 des Unterbaus 1, d.h. in Richtung des Pfeils 33 in Fig. 1, wobei der Werkstücktisch 14 sich in der in Fig. 1 dargestellten horizontalen Grundstellung befindet. Der Werkstückträger 10 ist so ausgebildet, dass der Winkel β zwischen seiner Drehachse 15 und der Drehachse 34 des Werkstücktisches 14 bei dem dargestellten Ausführungsbeispiel 55° beträgt. Aus der Wahl und gegenseitigen Abstimmung der beiden Winkel α und β ergibt sich der Grad der Überkippung des Werkstücktisches 14.

Ein besonderer Vorteil der Erfindung besteht in dem relativ großen Arbeitsraum auch in den in Fig. 2c dargestellten Zwischenstellungen des Werkstücktisches 14, was durch die zur Mittelebene 32 seitlich versetzte Anordnung der Auflager- bzw. Tragfläche 8 in funktionaler Verbindung mit der erfindungsgemäßen Schrägausrichtung des Werkstückträgers 10 erreicht wird. Ferner ist es vorteilhaft, daß bei der Werkstückbearbeitung in Stellungen des Werkstückträgers 10 z.B. gemäß Fig. 2c der Fräskopf 26 nur in einer Achse verfährt.

Die Erfindung ist nicht auf das dargestelle Ausführungsbeispiel beschränkt. So kann die erfindungsgemäße schräge Tischanordnung auch bei den sog. Bett-Maschinen angewandt werden, bei denen mindestens ein Werkstückträger auf einem Maschinenbett angeordnet ist, das als Teil des Maschinenunterbaus angesehen werden kann. Die das Auflager für den verdrehbaren Werkstückträger bildende schräge Tragfläche, deren die Drehachse für den Werkstücksträger bildende Mittelachse mit einer vertikalen Längsebene des Maschinenbetts einen spitzen Raumwinkel einschließt, kann an dem Maschinenbett oder einem Sockel seitlich versetzt zur vertikalen Mittelebene der Maschine mit entsprechend abgestimmter Schrägausrichtung ihrer Mittelachse angeordnet sein. Ein derartiger Sockel kann auch auf einem Maschinenbett in entsprechenden Führungen verfahrbar ausgebildet sein. Ferner können auch zwei der vorstehend im einzelnen beschriebenen Werkstückträger an einem Unterbau vorgesehen sein, und zwar vorzugsweise zu beiden Seiten der vertikalen Mittelebene.

Ferner kann das erfindungsgemäße technische Konzept auch bei einen Fräs- bzw. Spindelkopf enthaltenden Bearbeitungseinheiten einer Fräs- und Bohrmaschine angewandt werden. In diesem Fall ist eine der schrägen Tragfläche 8 der vorbeschriebenen Maschine entsprechende raumschräge Auflagerfläche an einem vertikalen oder horizontalen Schlitten bzw. Spindelstock ausgebildet, der in mindestens einer Koordinatenachse am Maschinenständer verfahrbar geführt ist. Auf dieser schrägen Auflagerfläche ist eine Konsole um deren Mittelachse verdrehbar gelagert. Die Mittelachse der Auflagerfläche ist unter einem Raumwinkel θ zu einer Vertikalebene ausgerichtet. An einem gegenüber der schrägen Trag- bzw. Auflagerfläche abgewinkelt angeordneten Stirn- oder Seitenteil der Konsole ist ein Spindelkopf mit einer drehangetriebenen Arbeitsspindel montiert. Durch geeignete Wahl und gegenseitige Abstimmung des Raumwinkels werden die vertikale und die horizontale Ausrichtung der Arbeitsspindel sowie zusätzlich eine Vielzahl von raumschrägen Spindelpositionen erreicht, beispielsweise zur Herstellung von rückseitigen Hinterschnitten. Von Vorteil gegenüber den bekannten Gabelköpfen ist die wesentlich höhere Gesamtsteifigkeit durch die großflächige Abstützung des Schwenkkopfes an dem schrägen Auflager, was hohe Spanleistungen und Genauigkeiten ermöglicht.

## Patentansprüche

1. Werkzeugmaschine, insbesondere Fräs- und Bohmaschine, mit
- einem formsteifen Unterbau (1), an dem eine schräg nach vorne-oben weisende Tragfläche (8) ausgebildet ist,
- mindestens einem um die Mittelachse (15) der ein Auflager bildenden Tragfläche (8) verdrehbaren Werkstückträger (10), der eine auf der Tragfläche (8) um deren Mittelachse (15) verdrehbar abgestützte Konsole (12) und einen auf einem abgewinkelten Tragteil (13) der Konsole angeordneten Werkstücktisch (14) aufweist, der durch Verdrehen des Werkstückträgers (10) in einer horizontalen und in einer vertikalen Grundstellung positionierbar ist, und
- mindestens einer in Koordinatenachsen verfahrbaren Bearbeitungseinheit (6) mit einwechselbarem Werkzeug,
**dadurch gekennzeichnet, dass**
- die Tragfläche (8) zur vertikalen Mittelebene (32) des Unterbaus (1) seitlich versetzt derart angeordnet ist, daß ihre Mittelachse (15) mit einer vertikalen Längslebene (32) des Unterbaus (1) einen spitzen Raumwinkel θ einschließt und der Werkstücktisch (14) in Zwischenpositionen innerhalb eines Drehwinkelbereichs eine nach vorn überkippte Lage einnimmt.

2. Werkzeugmaschine nach Anspruch 1,
**dadurch gekennzeichnet, dass**
der Werkstückträger (10) so ausgebildet ist, dass der Winkel (β) zwischen der seine Drehachse bildenden Mittelachse (15) der Tragfläche (8) und der Mittelachse (34) des Werkstücktischs (14) größer als 45° ist.

3. Werkzeugmaschine nach Anspruch 2,
**dadurch gekennzeichnet, dass**
der Winkel (β) zum Erhalt eines gewünschten Überkippungsgrads mit einem die seitliche Versetzung der Tragfläche (8) mitbestimmenden Winkel (α) zwischen der Vertikalebene (32) und der in die Horizontalebene projizierten Mittelachse (15) der Tragfläche (8) abgestimmt ist.

4. Werkzeugmaschine nach einem der vorstehenden Ansprüche,
**dadurch gekennzeichnet, dass**
der Werkstücktisch (14) drehangetrieben ist.

5. Werkzeugmaschine nach einem der vorstehenden Ansprüche,
**dadurch gekennzeichnet, dass**
der Unterbau ein Maschinenständer (1) ist, der an seiner vorderen Stirnseite eine seitlich zur vertikalen Mittelebene (32) des Unterbaus (1) angeordnete Ausnehmung (16) aufweist, deren Boden zumindest einen Teil der Tragfläche (8) des verdrehbaren Werkstückträgers (10) bildet.

6. Werkzeugmaschine nach Anspruch 5,
**dadurch gekennzeichnet, dass**
der Maschinenständer (1) eine in den horizontalen Koordinatenachsen (X, Y) verfahrbare Schlittenanordnung (23, 25) aufweist, an der die Bearbeitungseinheit (6) mit einem Fräskopf und vertikaler. Arbeitsspindel (29) in der vertikalen Koordinatenachse (Z) verfahrbar montiert ist.

7. Werzeugmaschine nach einem der Ansprüche 1 bis 4,
**dadurch gekennzeichnet, dass**
der Unterbau ein Maschinenbett ist, auf dem mindestens ein Werkstückträger (10) stationär oder verfahrbar angeordnet ist.

8. Werkzeugmaschine nach einem der vorstehenden Ansprüche,
**dadurch gekennzeichnet, dass**
an einem Unterbau (1) zwei Werkstückträger (10) auf je einer zu beiden Seiten der Mittelebene (32) angeordneten schrägen Tragfläche vorgesehen sind.

## Claims

1. Machine tool, particularly a milling and drilling machine, comprising
- a rigid base (1) on which an inclined support surface (8) pointing forwards and upwards is formed,
- at least one workpiece support (10) rotatable about the central axis (15) of the support surface (8) serving as support and comprising a support (12) supported on the support surface (8) so as to be rotatable about its central axis (15) and a workpiece table (14) disposed on a bent support element (13) of the support and movable into a horizontal and a vertical basic position by rotating the workpiece support (10) and
- at least one machining unit (6) shiftable along coordinate axes and including an exchangeable tool,
**characterised in that**
- the support surface (8) is laterally offset with respect to the vertical central plane (32) of the base (1) so that its central axis (15) forms an acute spatial angle θ with a vertical longitudinal plane (32) of the base (1) and that the workpiece table (14) assumes a forwards tilted position in intermediate positions within a rotational angle range.

2. Machine tool according to claim 1,
**characterised in that**
the workpiece support (10) is designed so that the angle (β) between the central axis (15) of the support surface (8) forming its rotational axis and the central axis (34) of the workpiece table (14) is greater than 45°.

3. Machine tool according to claim 2,
**characterised in that**
the angle (β) is adjusted together with an angle (α) between the vertical plane (32) and the central axis (15) of the support surface (8) projected into the horizontal plane also determining the lateral offset of the support surface (8) to obtain a desired degree of tilting.

4. Machine tool according to one of the preceding claims,
**characterised in that**
the workpiece table (14) is rotationally driven.

5. Machine tool according to one of the preceding claims,
**characterised in that**
the base is a machine column (1) comprising a recess (16) provided on its front surface and disposed laterally with respect to the vertical central plane (32) of the base (1), the bottom of said recess (16) forming at least part of the support surface (8) of the rotatable workpiece support (10).

6. Machine tool according to claim 5,
**characterised in that**
the machine column (1) comprises a slide arrangement (23, 25) shiftable along the horizontal coordinate axes (X, Y), the machining unit (6) including a milling head and a vertical work spindle (29) being mounted on said slide arrangement (23, 25) so as to be shiftable along the vertical coordinate axis (Z).

7. Machine tool according to one of the claims 1 to 4,
**characterised in that**
the base is a machine bed on which at least one workpiece support (10) is fixedly or shiftably provided.

8. Machine tool according to one of the preceding claims
**characterised in that**
two workpiece supports (10) are provided on a base (1) on two inclined support surfaces respectively disposed on both sides of the central plane (32).

## Revendications

1. Machine-outil, en particulier fraiseuse-aléseuse, comprenant:
- une infrastructure rigide (1) sur laquelle repose une surface de support (8) inclinée du haut vers l'avant,
- au moins un porte-pièce (10) rotatif autour de l'axe central (15) de la surface de support (8) formant un appui, comportant une console (12) soutenue par la surface de support (8) et rotative autour de l'axe central (15) de celle-ci, et une table de pièce (14) disposée sur une pièce de support coudée (13) de la console, ladite table peut se déplacer par rotation du porte-pièce (10) en direction des positions initiales horizontale et verticale, et
- au moins une unité d'usinage (6) qui peut se déplacer suivant les axes de coordonnées, avec un outil renouvelable,
**caractérisée en ce que**
- la surface de support (8) est décalée latéralement par rapport au plan vertical central (32) de l'infrastructure (1), de telle manière que son axe central (15) détermine un angle solide aigu θ avec un plan longitudinal vertical (32) de l'infrastructure (1) et que la table de pièce (14) prenne une position de basculement vers l'avant dans des positions intermédiaires à l'intérieur d'une plage angulaire.

2. Machine-outil selon la revendication 1,
**caractérisée en ce que**
le porte-pièce (10) est formé de telle manière que l'angle (β) défini entre l'axe central (15) de la surface de support (8) formant son axe de rotation et l'axe central (34) de la table de pièce (14) soit supérieur à 45 °.

3. Machine-outil selon la revendication 2,
**caractérisée en ce que**
l'angle (β) est, pour obtenir un degré de basculement souhaité, ajusté avec un angle (α) qui détermine conjointement le décalage latéral de la surface de support (8) entre le plan vertical (32) et l'axe central (15) de la surface de support (8) projeté sur le plan horizontal.

4. Machine-outil selon l'une des revendications précédentes,
**caractérisée en ce que**
la table de pièce (14) est entraînée en rotation.

5. Machine-outil selon l'une des revendications précédentes,
**caractérisée en ce que**
l'infrastructure est un bâti de machine (1) présentant sur sa face frontale avant un évidement (16) disposé latéralement au plan vertical central (32), dont le fond forme au moins une partie de la surface de support (8) de la table de pièce (14) rotative.

6. Machine-outil selon la revendication 5,
**caractérisée en ce que**
**en ce que** le bâti de machine (1) comprend un dispositif à chariot (23, 25) pouvant se déplacer sur les axes de coordonnées horizontaux (X, Y), sur lequel l'unité d'usinage (6) avec une tête porte-fraise et une broche de travail verticale (29) est montée de manière à pouvoir se déplacer sur l'axe de coordonnées vertical (Z).

7. Machine-outil selon l'une des revendications 1 à 4,
**caractérisée en ce que**
l'infrastructure est un banc de machine, sur lequel est monté au moins un porte-pièce (10) stationnaire ou mobile.

8. Machine-outil selon l'une des revendications précédentes,
**caractérisée en ce que**
deux porte-pièces (10) sont prévus sur une infrastructure (1),
chacun sur une surface de support inclinée disposée sur un des deux côtés du plan central (32)
